# FASCICULE DE BREVET EUROPEEN

(11) **EP 1 373 001 B1**
(45) Date de publication et mention de la délivrance du brevet: **16.03.2005**
(21) Numéro de dépôt: 02730357.7
(22) Date de dépôt: 05.04.2002
(51) Int. Cl.: B60K 6/04

(54) **TRANSMISSION INFINIMENT VARIABLE A DERIVATION DE PUISSANCE A DEUX MODES DE FONCTIONNEMENT**
STUFENLOS VERSTELLBARES GETRIEBE MIT VERÄNDERLICHER KRAFTVERTEILUNG BEI ZWEI FUNKTIONSMODI
INFINITELY VARIABLE POWER BRANCHING TRANSMISSION WITH TWO OPERATING MODES

(30) Priorité: 06.04.2001 FR 0104690
(43) Date de publication de la demande: 02.01.2004
(73) Titulaire: Renault s.a.s., 92109 Boulogne Billancourt (FR)
(72) Inventeur: ANTHOINE, Pierre, F-92500 Rueil Malmaison (FR); ROUGE, Magali, F-92500 Rueil Malmaison (FR); CHANSON, Sébastien, F-75020 Paris (FR); KEFTI-CHERIF, Ahmed, F-78190 Trappes (FR); KERGAR, Keyvan, F-78230 Le Pecq (FR)
(86) Numéro de dépôt international: PCT/FR2002/001197
(87) Numéro de publication internationale: WO 2002/081246

(56) Documents cités:
- EP-A- 0 937 600
- WO-A-00/06407
- FR-A- 2 739 330
- US-A- 4 588 040
- US-A- 5 558 589
- US-A- 5 571 058
- US-A- 5 935 035

## Description

La présente invention concerne une transmission à dérivation de puissance permettant d'obtenir une variation continue de rapport de marche arrière en marche avant, en passant par une position particulière, dite « neutre en prise », où la vitesse de déplacement du véhicule est nulle, pour un régime quelconque du moteur thermique.

Plus précisément, elle a pour objet une transmission infiniment variable à dérivation de puissance à deux modes de fonctionnement, dont les éléments constitutifs sont répartis entre deux voies de puissance reliant en parallèle le moteur thermique aux roues du véhicule, ces moyens incluant au moins deux trains épicycloïdaux deux machines électriques, un étage de réduction, et des moyens de commande orientant différemment la puissance entre l'entrée et la sortie de la transmission selon le mode de fonctionnement de celle-ci.

Les transmissions à dérivation de puissance peuvent reposer sur trois principes, ou modes, de dérivation de puissance connus. Selon le premier mode, dit « à entrée couplée », la transmission comporte un couple de pignons de dérivation de puissance qui dérive la puissance à l'entrée du mécanisme, et un train épicycloïdal « assembleur », qui réunit les puissances en sortie de mécanisme. L'élément de contrôle est un variateur.

Dans les transmissions à dérivation de puissance dites « à sortie couplée », on a par exemple un train planétaire diviseur de puissance à l'entrée du mécanisme et un couple de pignons rassembleur de puissance en sortie du mécanisme, l'élément de contrôle étant toujours un variateur.

Enfin, dans les transmissions à dérivation de puissance dites « à deux points d'adaptation», un premier train épicycloïdal diviseur de puissance peut être placé en entrée de boîte, tandis qu'un second train épicycloïdal rassembleur de puissance est disposé en sortie de boîte, l'élément de contrôle étant toujours un variateur.

Les transmissions infiniment variables (Infinitely Variable transmission ou I.V.T) classiques n'utilisent qu'un ou deux de ces trois principes de fonctionnement.

Par les publications US 5 558 589 et US 5 935 035, on connaît des transmissions infiniment variables à deux modes de fonctionnement, selon le préambule de la revendication 1, regroupant au moins deux trains planétaires, deux embrayages de changement de mode, et un variateur électrique, et utilisant comme premier mode de fonctionnement, le principe de la dérivation de puissance à sortie couplée.

Selon ces publications, les moyens de changement de mode sont placés à l'extérieur des trains épicycloïdaux.

L'intérêt de disposer de deux modes de fonctionnement réside dans l'augmentation de la plage des rapports de la transmission et dans la possibilité de diminuer le dimensionnement des machines électriques.

Toutefois, dans ces architectures bimodes connues, les changements de mode sont effectués par des embrayages multi-disques disposés sur la sortie de la transmission et sont accompagnés pour cette raison d'à coups de couple ressentis désagréablement par les utilisateurs.

Un autre inconvénient des architectures décrites dans ces publications, réside dans leur complexité, liée notamment à la présence d'au moins deux embrayages et un frein.

Le but de la présente invention est de réaliser une transmission infiniment variable à dérivation de puissance et à deux modes de fonctionnement, d'architecture plus simple que les transmissions habituelles du même type, utilisant des machines électriques de faible dimensionnement, et dont les changements de mode ne sont accompagnés d'aucun à coup de couple.

Dans ce but, elle propose que les changements de mode soient effectués en intervenant sur des liaisons mécaniques internes de la transmission situées entre les deux trains.

Conformément à l'invention, on dispose à cet effet au moins deux étages de réduction entre les deux trains épicycloïdaux, ces étages étant respectivement sollicités dans le premier et dans le second mode de fonctionnement. Ces deux étages de réduction sont disposés en parallèle entre les deux trains sur la même voie de puissance.

Selon d'autres caractéristiques de l'invention, les deux machines électriques sont montées en série sur la même voie de puissance et les deux étages de réduction sont montés en parallèle entre les deux machines électriques.

Sans sortir du cadre de l'invention les machines électriques peuvent également être reliées à un élément de stockage d'énergie ou à un générateur.

Selon les modes de réalisation préférés de l'invention, la transmission proposée peut comporter sept, six ou cinq étages de réduction, dont deux sont disposés à l'extérieur des trains épicycloïdaux.

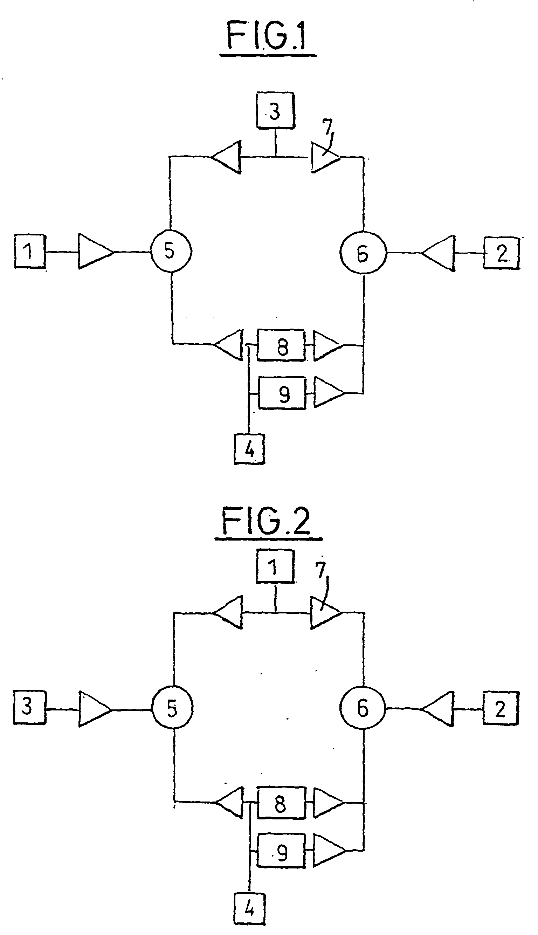

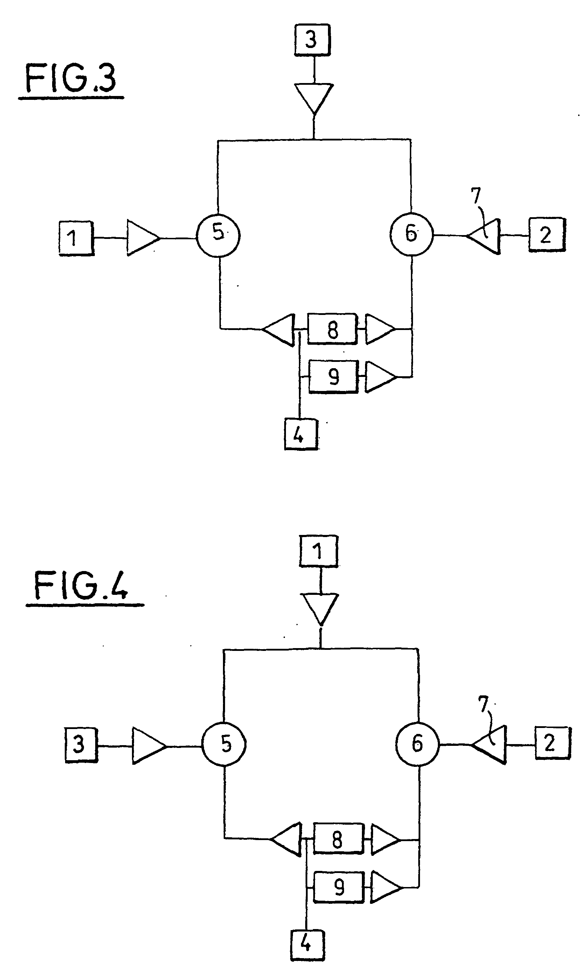

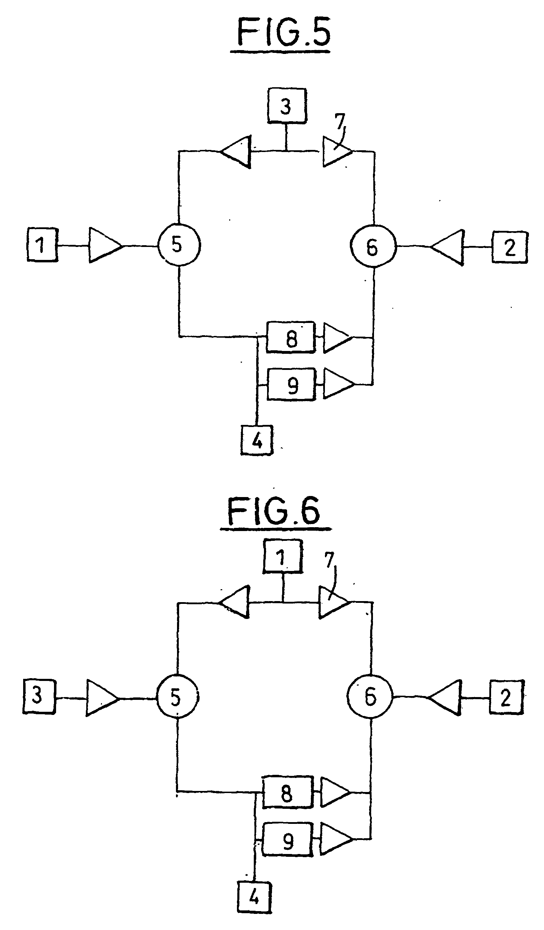

D'autres caractéristiques et avantages de la présente invention apparaîtront clairement à la lecture de la description suivante, en se reportant aux dessins annexés, sur lesquels les figures 1 à 10 illustrent dix modes de réalisation particuliers de celle-ci.

La transmission de la figure 1 est composée de deux trains épicycloïdaux 5, 6, de sept étages de réduction 7, de deux systèmes de changement de mode 8 et 9, qui peuvent être, soit des crabots, soit des embrayages multi-disques, et de deux machines électriques 2, 4, constituants ensemble un variateur.

Cette transmission dispose de quatre connections d'entrée et de sortie, qui peuvent être respectivement reliées au moteur thermique, 1, aux roues 3, et aux deux machines électriques 2 et 4.

Le moteur thermique 1 est connecté à un étage de réduction 7. Les roues 3 sont connectées à deux étages de réduction 7. Une première machine électrique 2 du variateur, est reliée à un étage de réduction 7, et une seconde machine électrique 4 est reliée à un étage de réduction 7 et aux deux systèmes de changement de mode 8 et 9.

Trois étages de réduction sont connectés au premier train épicycloïdal 5. Quatre étages de réduction sont connectés au deuxième train épicycloïdal 6. Un étage de réduction est relié à chaque système de changement de mode 8 et 9.

La transmission illustrée par la figure 1 comporte donc sept étages de réduction dont cinq sont disposés entre les deux trains épicycloïdaux et dont deux sont disposés à l'extérieur de ces derniers.

Le moteur thermique 1 est connecté au train épicycloïdal 5 par l'intermédiaire d'un étage de réduction, et les roues 3 sont connectées à chaque train épicycloïdal 5, 6, par l'intermédiaire d'un étage de réduction.

Cette transmission dispose de deux modes de fonctionnement à deux points d'adaptation. Dans le premier mode, le premier système de changement de mode 8, relié à deux étages de réduction d'une part, et à une machine électrique 4 d'autre part, est ouvert. Cette première branche est donc libre, tandis que la seconde, comportant le second système de changement de mode 9, relié comme le premier à deux étages de réduction et à la machine électrique 4, est fermée.

A l'inverse, dans le deuxième mode de fonctionnement, la première branche est fermée et la seconde branche est ouverte..

Sur la figure 2 on retrouve les mêmes éléments que sur la figure 1. Cette transmission dispose, comme la précédente, de quatre connections d'entrée et de sortie qui peuvent être respectivement reliées au moteur thermique 1, aux roues 3, à la première machine électrique 2, et à la seconde machine électrique 4. Ici, le moteur thermique est connecté à chaque train épicycloïdal 5, 6, par un étage de réduction 7, et les roues 3 sont connectées à un seul train épicycloïdal 5 par un étage de réduction.

Comme celle de la figure 1, la transmission de la figure 2 dispose de deux modes de fonctionnement à deux points d'adaptation, selon l'ouverture et la fermeture du premier et du second système de changement de mode 8, 9 disposés de façon analogue.

Les transmissions illustrées par les figures 3 à 6 comportent six étages de réduction, dont quatre sont disposés entre les deux trains épicycloïdaux et deux sont disposés à l'extérieur de ces derniers.

Sur la figure 3, le moteur thermique 1 est relié par l'intermédiaire d'un étage de réduction 7 à un train épicycloïdal 5

Sur la figure 4 le moteur thermique 1 est relié par l'intermédiaire d'un seul étage de réduction 7 aux deux trains épicycloïdaux 5, 6.

Sur la figure 5 les roues 3 sont reliées à chaque train épicycloïdal 5, 6, par l'intermédiaire d'un étage de réduction 7.

Sur la figure 6 le moteur thermique 1 est relié à chaque train épicycloïdal 5, 6 par un étage de réduction 7.

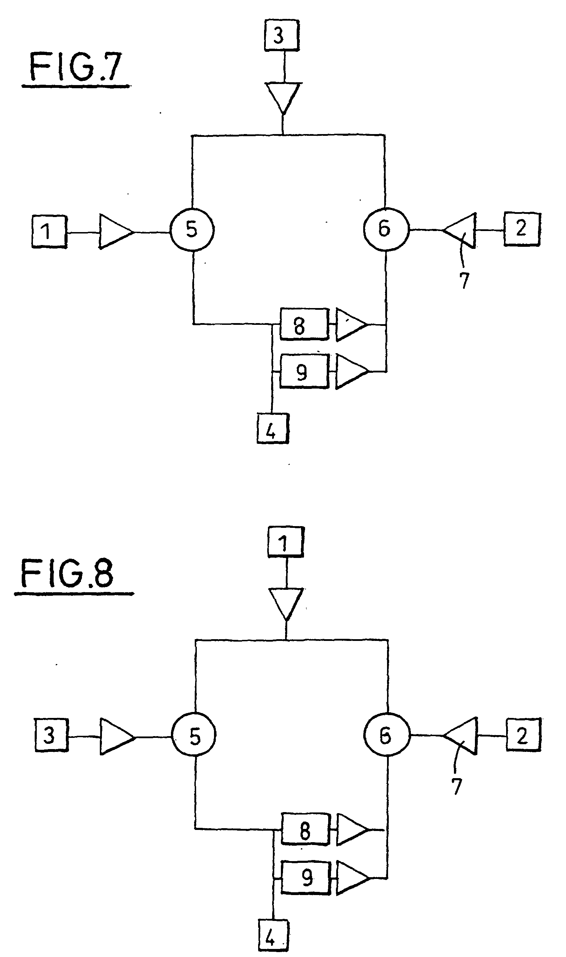

Les transmissions conformes à l'invention illustrées par les figures 7 et 8 comportent cinq étages de réduction dont trois sont disposés entre les deux trains épicycloïdaux 5, 6, et deux sont disposés à l'éxtérieur de ces derniers.

Sur la figure 7, le moteur thermique 1 est relié à un train épicycloïdal 5 par l'intermédiaire d'un étage de réduction 7.

Sur la figure 8 le moteur thermique 1 est relié aux deux trains épicycloïdaux 5, 6, par un seul étage de réduction 7.

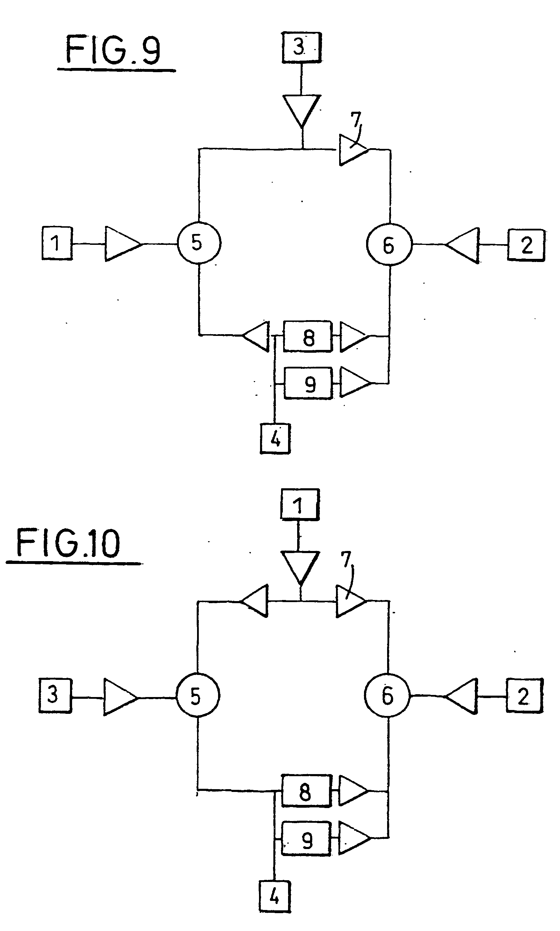

Enfin les transmissions des figures 9 et 10 comportent, comme celles des figures 1 et 2, sept étages de réduction 7, dont cinq sont disposés entre les deux trains épicycloïdaux 5, 6, et deux sont disposés à l'extérieur de ces derniers.

Sur la figure 9, les roues 3 sont reliées au train épicycloïdal 6 par deux étages de réduction 7 en série, alors que sur la figure 10, c'est le moteur 1, qui est relié au train 6 par deux étages de réduction 7 en série.

En conclusion, Dans chacun des modes de réalisation non limitatifs de l'invention, décrits ci-dessus, on retrouve les deux trains épicycloïdaux, les deux machines électriques, un certain nombre d'étages de réduction. Les transmissions correspondantes comportent également des moyens de commande (non représentés), orientant différemment la puissance entre l'entrée et la sortie de la transmission selon le mode de fonctionnement de celle-ci. Les deux machines électriques sont montées en série sur la même voie de puissance et peuvent être reliées à un générateur ou à un élément de stockage d'énergie (non représenté).

Dans tous les cas, la disposition de deux branches parallèles, entre les deux machines électriques comportant chacune un étage de réduction et un système de changement de mode, permet de disposer de deux modes de fonctionnement à deux points de fonctionnement selon la branche utilisée.

## Revendications

1. Transmission infiniment variable à dérivation de puissance à deux modes de fonctionnement, dont les éléments constitutifs sont répartis entre deux voies de puissance reliant en parallèle le moteur thermique (1) aux roues (3) du véhicule, la transmission incluant au moins deux trains épicycloïdaux (5, 6), deux machines électriques (2, 4), un étage de réduction (7), et des moyens de commande orientant différemment la puissance entre l'entrée et la sortie de la transmission selon le mode de fonctionnement de celle-ci, **caractérisée en ce qu'**elle comporte deux étages de réduction (7) disposés en parallèle entre les deux trains épicycloïdaux (5, 6) sur la même voie de puissance, ces deux étages étant sollicités respectivement dans le premier et dans le second mode de fonctionnement de la transmission.

2. Transmission selon la revendication 1, **caractérisée en ce que** les deux machines électriques (2, 4) sont montées en série sur la même voie de puissance.

3. Transmission selon la revendication 1 ou 2, **caractérisée en ce que** les deux étages de réduction (7) sont montés en parallèle entre les deux machines électriques (2,4).

4. Transmission selon la revendication 1, 2 ou 3, **caractérisée en ce que** les machines électriques (2, 4) sont reliées à un élément de stockage d'énergie.

5. Transmission selon la revendication 1, 2 ou 3, **caractérisée en ce que** les deux machines électriques (2, 4) sont reliées à un générateur d'énergie électrique.

6. Transmission selon l'une des revendications précédentes, **caractérisée en ce qu'**elle comporte sept étages de réduction (7) dont cinq sont disposés entre les deux trains épicycloïdaux (5, 6) et deux sont disposés à l'extérieur de ces derniers.

7. Transmission selon la revendication 6, **caractérise en ce que** le moteur thermique (1) est connecté à train épicycloïdal (5) par l'intermédiaire d'un étage de réduction (7), et **en ce que** les roues (3) sont connectées à chaque train épicycloïdal (5, 6), par l'intermédiaire d'un étage de réduction (7).

8. Transmission selon la revendication 6, **caractérisée en ce que** le moteur thermique (1) est connecté à chaque train épicycloïdal (5, 6) par un étage de réduction (7), et **en ce que** les roues (3) sont connectées à un seul train épicycloïdal (6) par un étage de réduction (7).

9. Transmission selon la revendication 6, **caractérisée en ce que** les roues (3) sont connectées à un train épicycloïdal (6) par deux étages de réduction (7) en série.

10. Transmission selon la revendication 6, **caractérisée en ce que** le moteur (1) est connecté à un train épicycloïdal (6) par deux étages de réduction (7) en série.

11. Transmission selon l'une des revendication 1 à 5, **caractérisée en ce qu'**elle comporte six étages de réduction (7), dont quatre sont disposés entre les deux trains épicycloïdaux (5, 6) et deux sont disposés à l'extérieur de ces derniers.

12. Transmission selon la revendication 11, **caractérisée en ce que** le moteur thermique (1) est relié par l'intermédiaire, d'un étage de réduction (7) à un train épicycloïdal (5).

13. Transmission selon la revendication 11, **caractérisé en ce que** le moteur thermique (1) est relié par l'intermédiaire d'un seul étage de réduction (7) aux deux trains épicycloïdaux (5, 6).

14. Transmission selon la revendication 11, **caractérisée en ce que** les roues (3) sont reliées à chaque train épicycloïdal (5, 6), par l'intermédiaire d'un étage de réduction (7).

15. Transmission selon la revendication 11, **caractérisée en ce que** le moteur thermique (1) est relié à chaque train épicycloïdal (5, 6) par un étage de réduction (7).

16. Transmission selon l'une des revendications 1 à 5, **caractérisée en ce qu'**elle comporte cinq étages de réduction (7), dont trois sont disposés entre les deux trains épicycloïdaux (5, 6) et deux sont disposés à l'extérieur de ces derniers.

17. Transmission selon la revendication 16, **caractérisée en ce que** le moteur thermique (1) est relié à un train épicycloïdal (5) par l'intermédiaire d'un étage de réduction (7).

18. Transmission selon la revendication 16, **caractérisée en ce que** le moteur thermique (1) est relié aux deux trains épicycloïdaux (5, 6) par un seul étage de réduction (7).

## Claims

1. An infinitely variable power shunt transmission with two operating modes, whose constituent members are divided between two power channels connecting the internal combustion engine (1) in parallel to the wheels (3) of the vehicle, the transmission comprising at least two planetary gear sets (5, 6), two electric machines (2, 4), a reduction stage (7) and control means orienting the power differently between the input and the output of the transmission depending on its operating mode, **characterised in that** it comprises two reduction stages (7) disposed in parallel between the two planetary gear sets (5, 6) on the same power channel, these two stages being called upon in the first and in the second operating mode of the transmission respectively.

2. A transmission as claimed in claim 1, **characterised in that** the two electric machines (2, 4) are mounted in series on the same power channel.

3. A transmission as claimed in claims 1 or 2, **characterised in that** the two reduction stages (7) are mounted in parallel between the two electric machines (2,4).

4. A transmission as claimed in claims 1, 2 or 3, **characterised in that** the electric machines (2, 4) are connected to an energy storage member.

5. A transmission as claimed in claim 1, 2 or 3, **characterised in that** the two electric machines (2, 4) are connected to an electricity generator.

6. A transmission as claimed in one of the preceding claims, **characterised in that** it comprises seven reduction stages (7), five of which are disposed between the two planetary gear sets (5, 6) and two of which are disposed externally to the latter.

7. A transmission as claimed in claim 6, **characterised in that in that** the internal combustion engine (1) is connected to the planetary gear set (5) by means of a reduction stage (7) and **in that** the wheels (3) are connected to each planetary gear set (5, 6) by means of a reduction stage (7).

8. A transmission as claimed in claim 6, **characterised in that** the internal combustion engine (1) is connected to each planetary gear set (5, 6) by a reduction stage (7) and **in that** the wheels (3) are connected to a single planetary gear set (6) by a reduction stage (7).

9. A transmission as claimed in claim 6, **characterised in that** the wheels (3) are connected to a planetary gear set (6) by two reduction stages (7) in series.

10. A transmission as claimed in claim 6, **characterised in that** the engine (1) is connected to a planetary gear set (6) by two reduction stages (7) in series.

11. A transmission as claimed in one of claims 1 to 5, **characterised in that** it comprises six reduction stages (7), four of which are disposed between the two planetary gear sets (5, 6) and two of which are disposed externally to the latter.

12. A transmission as claimed in claim 11, **characterised in that** the internal combustion engine (1) is connected to a planetary gear set (5) by a reduction stage (7).

13. A transmission as claimed in claim 11, **characterised in that** the internal combustion engine (1) is connected to the two planetary gear sets (5, 6) by a single reduction stage (7).

14. A transmission as claimed in claim 11, **characterised in that** the wheels (3) are connected to each planetary gear set (5, 6) by a reduction stage (7).

15. A transmission as claimed in claim 11, **characterised in that** the internal combustion engine (1) is connected to each planetary gear set (5, 6) by a reduction stage (7).

16. A transmission as claimed in one of claims 1 to 5, **characterised in that** it comprises five reduction stages (7), three of which are disposed between the two planetary gear sets (5, 6) and two of which are disposed externally to the latter.

17. A transmission as claimed in claim 16, **characterised in that** the internal combustion engine (1) is connected to a planetary gear set (5) by a reduction stage (7).

18. A transmission as claimed in claim 16, **characterised in that** the internal combustion engine (1) is connected to the two planetary gear sets (5, 6) by a single reduction stage (7).

## Patentansprüche

1. Unendlich variables Getriebe mit Kraftverzweigung mit zwei Betriebsmodi, dessen grundlegende Elemente auf zwei Kraftwege verteilt sind, die parallel den Verbrennungsmotor (1) mit den Rädern (3) des Fahrzeugs verbinden, wobei das Getriebe mindestens zwei Umlaufgetriebezüge (5, 6), zwei Elektromaschinen (2, 4), eine Reduktionsstufe (7) und Steuermittel umfasst, die die Kraft zwischen dem Eingang und dem Ausgang des Getriebes gemäß dessen Betriebsmodus unterschiedlich lenken,
**dadurch gekennzeichnet, dass** es zwei Reduktionsstufen (7) aufweist, die parallel zwischen den beiden Umlaufgetriebezügen (5, 6) auf dem selben Kraftweg angeordnet sind, wobei diese zwei Stufen jeweils im ersten und im zweiten Betriebsmodus des Getriebes angefordert werden.

2. Getriebe gemäß Anspruch 1, **dadurch gekennzeichnet, dass** die zwei Elektromaschinen (2, 4) in Serie auf dem selben Kraftweg angeordnet sind.

3. Getriebe gemäß Anspruch 1 oder 2, **dadurch gekennzeichnet, dass** die zwei Reduktionsstufen (7) parallel zwischen den zwei Elektromaschinen (2, 4) angeordnet sind.

4. Getriebe gemäß Anspruch 1, 2 oder 3, **dadurch gekennzeichnet, dass** die zwei Elektromaschinen (2, 4) mit einem Energiespeicherelement verbunden sind.

5. Getriebe gemäß Anspruch 1, 2 oder 3, **dadurch gekennzeichnet, dass** die zwei Elektromaschinen (2, 4) mit einem elektrischen Stromgenerator verbunden sind.

6. Getriebe gemäß einem der vorhergehenden Ansprüche, **dadurch gekennzeichnet, dass** es sieben Reduktionsstufen (7) aufweist, von denen fünf zwischen den zwei Umlaufgetriebezügen (5, 6) angeordnet sind, und zwei außerhalb von letzteren angeordnet sind.

7. Getriebe gemäß Anspruch 6, **dadurch gekennzeichnet, dass** der Verbrennungsmotor (1) mit Umlaufgetriebezug (5) über eine Reduktionsstufe (7) verbunden ist, und **dadurch**, dass die Räder (3) mit jedem Umlaufgetriebezug (5, 6) über eine Reduktionsstufe (7) verbunden sind.

8. Getriebe gemäß Anspruch 6, **dadurch gekennzeichnet, dass** der Verbrennungsmotor (1) mit jedem Umlaufgetriebezug (5, 6) über eine Reduktionsstufe (7) verbunden ist, und **dadurch**, dass die Räder (3) mit einem einzigen Umlaufgetriebezug (6) über eine Reduktionsstufe (7) verbunden sind.

9. Getriebe gemäß Anspruch 6, **dadurch gekennzeichnet, dass** die Räder (3) mit einem Umlaufgetriebezug (6) durch zwei Reduktionsstufen (7) in Serie verbunden sind.

10. Getriebe gemäß Anspruch 6, **dadurch gekennzeichnet, dass** der Motor (1) mit einem Umlaufgetriebezug (6) über zwei Reduktionsstufen (7) in Serie verbunden ist.

11. Getriebe gemäß einem der Ansprüche 1 bis 5, **dadurch gekennzeichnet, dass** es sechs Reduktionsstufen (7) aufweist, von denen vier zwischen den beiden Umlaufgetriebezügen (5, 6) angeordnet sind, und zwei außerhalb von letzteren angeordnet sind.

12. Getriebe gemäß Anspruch 11, **dadurch gekennzeichnet, dass** der Verbrennungsmotor (1) über eine Reduktionsstufe (7) mit einem Umlaufgetriebezug (5) verbunden ist.

13. Getriebe gemäß Anspruch 11, **dadurch gekennzeichnet, dass** der Verbrennungsmotor (1) über eine einzige Reduktionsstufe (7) mit den beiden Umlaufgetriebezügen (5, 6) verbunden ist.

14. Getriebe gemäß Anspruch 11, **dadurch gekennzeichnet, dass** die Räder (3) mit jedem Umlaufgetriebezug (5, 6) über eine Reduktionsstufe (7) verbunden sind.

15. Getriebe gemäß Anspruch 11, **dadurch gekennzeichnet, dass** der Verbrennungsmotor (1) mit beiden Umlaufgetriebezügen (5, 6) über eine Reduktionsstufe (7) verbunden ist.

16. Getriebe gemäß einem der Ansprüche 1 bis 5, **dadurch gekennzeichnet, dass** es fünf Reduktionsstufen (7) aufweist, von denen drei zwischen den beiden Umlaufgetriebezügen (5, 6) angeordnet sind, und zwei außerhalb von letzteren angeordnet sind.

17. Getriebe gemäß Anspruch 16, **dadurch gekennzeichnet, dass** der Verbrennungsmotor (1) mit einem Umlaufgetriebezug (5) über eine Reduktionsstufe (7) verbunden ist.

18. Getriebe gemäß Anspruch 16, **dadurch gekennzeichnet, dass** der Verbrennungsmotor (1) mit den beiden Umlaufgetriebezügen (5, 6) über eine einzige Reduktionsstufe (7) verbunden ist.
